# EUROPEAN PATENT APPLICATION

(11) **EP 4 421 734 A1**
(43) Date of publication of application: **28.08.2024**
(21) Application number: 23201297.1
(22) Date of filing: 02.10.2023
(51) Int. Cl.: G06T 7/11

(54) **METHOD AND SYSTEM FOR IMAGE SEGMENTATION**

(30) Priority: 26.02.2023 IN 202321013016
(71) Applicant: Kurle, Shamika Mahesh, 400601 Mumbai (IN)
(72) Inventor: Kurle, Shamika Mahesh, 400601 Mumbai (IN)
(74) Representative: Sach, Greg Robert

(57) **Abstract**

Disclosed herein is an image segmentation device that inputs (304) an image to be segmented as reference frame, with values corresponding to those of pixels in the image. The device initializes (306) a filter with similar properties to the reference frame and a starting value. A processed image, similar to the reference image, is also initialized (308). The device then updates (310) each pixel in the processed image with the corresponding value from the filter, until the values of pixels in the processed image match those of the reference image. During iterations, the device identifies (312) pixels in the processed image with a pre-defined value as "root nodes" and assigns (314) them an index based on the iteration count when their values reached that value. Finally, the device segments (316) the root nodes into multiple clusters, grouping together nodes within a pre-defined distance and with indices within a specified range.

## Description

### Technical Field

This disclosure relates generally to image processing mechanisms, and more particularly to a method and system for facilitating image segmentation.

### Background

Image segmentation is the process of dividing an image into multiple regions or segments. It is an important step in image analysis and computer vision, as it allows for the extraction of meaningful information and features from an image. Image segmentation is the process of dividing an image into multiple regions or segments. One approach to image segmentation is using clustering which is a technique for grouping data points into clusters based on their similarity. In image segmentation, clustering can be used to group pixels or regions of an image based on their characteristics, such as color, texture, or intensity.

In image segmentation using clustering, a tree-based structure is used where the pixels or regions of the image are organized into a tree with root nodes and leaf nodes. The root nodes represent the high-level clusters, and the leaf nodes represent the individual data points or regions within the clusters. The tree can then be used to identify and classify the different regions of the image.

However, there are a number of technical issues that can arise in image segmentation, which can make it challenging to achieve accurate and reliable results.

One issue is that the appearance of an object or region in an image can vary significantly due to factors such as lighting, pose, viewpoint, and occlusion. This can make it difficult to accurately segment the object or region based on a single appearance model.

Another issue is that images can contain a large amount of noise, which can interfere with the accuracy of the segmentation process. Noise can come from a variety of sources, including sensor noise, quantization noise, and compression artifacts.

A third issue is that image segmentation algorithms can be sensitive to initialization and can produce different results depending on the initial conditions. This can make it difficult to ensure that the algorithm converges to the correct solution.

Finally, there are often multiple objects or regions in an image that need to be segmented, and these can overlap or be adjacent to each other. This can make it challenging to accurately separate the different objects or regions and assign them to the correct clusters.

Overall, there are a number of technical issues that can arise in image segmentation, and current technologies still have some limitations in addressing these issues. Therefore, there exists a need to provide a system and/or method that aids performing of image segmentation in an accurate and efficient manner.

### SUMMARY

In one embodiment, a method of image segmentation, is disclosed. The method includes ingesting, into an image segmentation device, an input image to be segmented as reference frame. The reference frame includes values that correspond to the values of a plurality of pixels in the input image. The method includes initializing, by the image segmentation device, a filter of substantially same properties as the reference frame, with a first pre-defined value. The method further includes initializing, by the image segmentation device, a processed image, which is substantially the same as the reference image. The method further includes updating, by the image segmentation device, each of the plurality of pixels of the processed image with value of corresponding pixel in the filter, till the value of each the plurality of pixels of the processed image is the same as those of the reference image. The method further includes identifying, by the image segmentation device, during each iteration of incrementing, a plurality of root nodes in the processed image. Each of the plurality of root nodes correspond to pixels having a second pre-defined value. The method further includes assigning, by the image segmentation device, an index to the identified root nodes. The index corresponds to the iteration count at which the value of the pixel of the identified root node reached the second pre-defined value. The method further includes segmenting, by the image segmentation device, the identified root nodes of the processed image in a plurality of clusters. Each cluster includes a plurality of root nodes that may be present in a pre-defined vicinity of each other and have the assigned index that is in a pre-defined range.

In another embodiment, a system for image segmentation, is disclosed. The system includes a processor and a memory storing instructions for execution by the processor, wherein the hardware processor is configured by the instructions to perform operations that include ingesting an input image to be segmented as reference frame, wherein the reference frame comprises values that correspond to the values of a plurality of pixels in the input image. The operations include initializing a filter of substantially same properties as the reference frame, with a first pre-defined value. The operations further include initialize a processed image which is substantially the same as the reference image. The operations further include updating each of the plurality of pixels of the processed image with value of corresponding pixel in the filter, till the value of each the plurality of pixels of the processed image is the same as those of the reference image. The operations further include identifying, during each iteration of incrementing, a plurality of root nodes in the processed image. Each of the plurality of root nodes correspond to pixels having a second pre-defined value. The operations further include assigning an index to the identified root nodes. The index corresponds to the iteration count at which the value of the pixel of the identified root node reached the second pre-defined value. The operations further include segmenting the identified root nodes of the processed image in a plurality of clusters. Each cluster includes a plurality of root nodes that may be present in a pre-defined vicinity of each other and have the assigned index that is in a pre-defined range.

In yet another embodiment, a non-transitory computer-readable medium storing computer-executable instructions for image segmentation, is disclosed. In one example, the stored instructions, when executed by a processor, cause the processor to perform operations that include ingesting an input image to be segmented as reference frame, wherein the reference frame comprises values that correspond to the values of a plurality of pixels in the input image. The operations include initializing a filter of substantially same properties as the reference frame, with a first pre-defined value. The operations further include initialize a processed image which is substantially the same as the reference image. The operations further include updating each of the plurality of pixels of the processed image with value of corresponding pixel in the filter, till the value of each the plurality of pixels of the processed image is the same as those of the reference image. The operations further include identifying, during each iteration of incrementing, a plurality of root nodes in the processed image. Each of the plurality of root nodes correspond to pixels having a second pre-defined value. The operations further include assigning an index to the identified root nodes. The index corresponds to the iteration count at which the value of the pixel of the identified root node reached the second pre-defined value. The operations further include segmenting the identified root nodes of the processed image in a plurality of clusters. Each cluster includes a plurality of root nodes that may be present in a pre-defined vicinity of each other and have the assigned index that is in a pre-defined range.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 is an exemplary network environment depicting method of image segmentation, in accordance with some embodiments of the present disclosure.
FIG. 2 is a block diagram of exemplary system for image segmentation, in accordance with some embodiments of the present disclosure.
FIG. 3 is a flow diagram of a detailed exemplary process of image segmentation, in accordance with some embodiments of the present disclosure.
FIG. 4 is a block diagram of an exemplary computer system for implementing embodiments consistent with the present disclosure is illustrated

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Various implementations may be found in a method and/or a system for image segmentation, is disclosed. The method includes ingesting, into an image segmentation device, an input image to be segmented as reference frame. The reference frame includes values that correspond to the values of a plurality of pixels in the input image. In an embodiment, ingesting comprises initializing a matrix with the pixel values of the input image. The dimensionality of the matrix corresponds to the dimensionality of the input image.

The method includes initializing, by the image segmentation device, a filter of substantially same properties as the reference frame, with a first pre-defined value. The method further includes initializing, by the image segmentation device, a processed image, which is substantially the same as the reference image.

The method further includes updating, by the image segmentation device, each of the plurality of pixels of the processed image with value of corresponding pixel in the filter, till the value of each the plurality of pixels of the processed image is the same as those of the reference image. In an embodiment, the updating comprises incrementing or decrementing the value of the plurality of pixels by the first pre-defined value.

The method further includes identifying, by the image segmentation device, during each iteration of incrementing, a plurality of root nodes in the processed image. Each of the plurality of root nodes correspond to pixels having a second pre-defined value.

The method further includes assigning, by the image segmentation device, an index to the identified root nodes. The index corresponds to the iteration count at which the value of the pixel of the identified root node reached the second pre-defined value.

The method further includes segmenting, by the image segmentation device, the identified root nodes of the processed image in a plurality of clusters. Each cluster includes a plurality of root nodes that may be present in a pre-defined vicinity of each other and have the assigned index that is in a pre-defined range. Further, each of the plurality of clusters may be indicative of a plurality of objects present in the ingested image. In an embodiment, the pre-defined range and the pre-defined vicinity may be user configurable. In an embodiment, the segmented processed image may be used for one or more of: Optical Character Recognition (OCR), medical diagnostics, video surveillance, robotics.

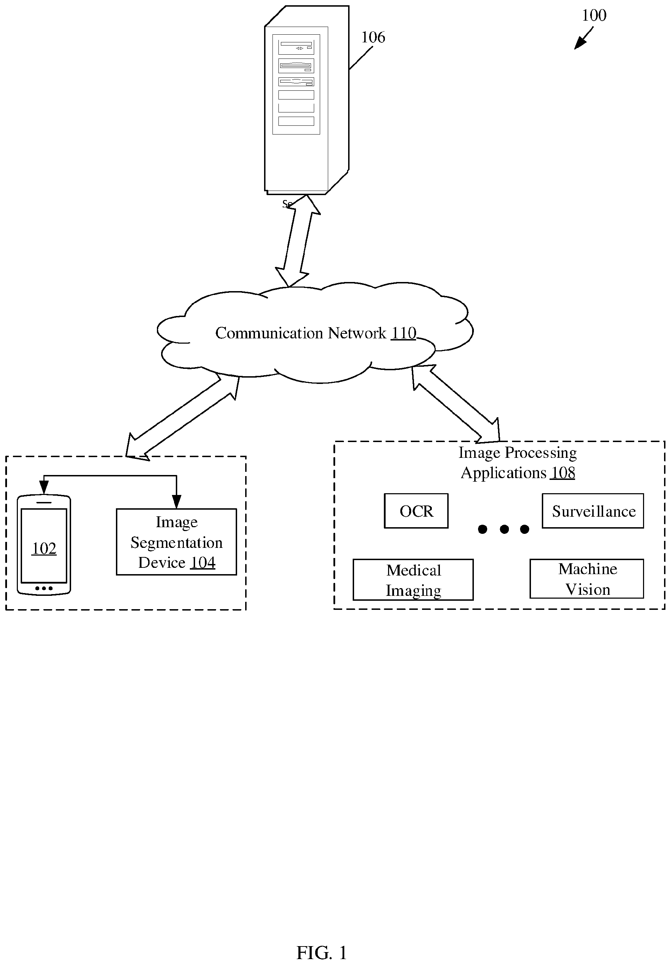

Referring now to FIG. 1, an exemplary network environment 100 method of image segmentation, is illustrated in accordance with some embodiments of the present disclosure. The network environment 100 displays an electronic device 102, an image segmentation device 104, an image database 106, and image processing applications 108, communicatively coupled with each other via the communication network 110.

In an implementation, the network environment 100 includes a network of the plurality of electronic devices 102 (e.g., a computer, a server, a digital device, a router, a modem, a bridge, a switch, etc.) for sending or receiving various data such as multimedia images. Each of the electronic devices 102 further includes one or more processors and a computer-readable storage medium (e.g., a memory). The computer-readable storage medium stores instructions that, when executed by the one or more processors, cause the one or more processors to perform data reception and transmission in accordance with aspects of the present disclosure. The computer-readable storage medium may also store various data (e.g., optimal network path, optimal packet size, data packets, current packet size of a node, etc.) that may be captured, processed, and/or required by the network environment 100.

In an embodiment, the electronic device 102 may include suitable logic, circuitry, interfaces, and/or code for capturing of the multimedia images by use of optical sensor integrated with the electronic device 102. Optical sensor may optionally include charge-coupled device (CCD) or complementary metal-oxide semiconductor (CMOS) phototransistors. Optical sensor may receive light from the environment, projected through one or more lens, and converts the light to data representing an image. The optical sensor optionally captures still images or video. The electronic device 102 may further enable rendering of the captured one or more multimedia images on a user interface displayed on a display screen. Examples of implementation of the display screen of the electronic devices may include, but are not limited to, a Liquid Crystal Display (LCD) display, a Light Emitting Diode (LED) display, an Organic LED (OLED) display technology.

In an implementation, the image segmentation device 104 may be integrated with the electronic device 102. In another implementation, the image segmentation device 104 may be remotely located with respect to the electronic device 102 and the communication may be enabled by the communication network 110. In such an implementation, the image segmentation device 104 may correspond to a an application programming interface (API) hosted in a cloud environment.

In an implementation, the image database 106 may include suitable logic, circuitry, interfaces, and/or code for storing a plurality of multimedia images that may be used by the image segmentation device 104. The images captured by the electronic device 1032 may be transmitted to the image database for storage, via the communication network 110. Such images may then be referenced by the image segmentation device 104 for performing image processing. The image database 106 may be further configured to store the image in the segmented form which may be referenced by the image processing applications 108.

In an implementation, the image processing application 108 may include suitable logic, circuitry, interfaces, and/or code for processing the segmented image generated by the image segmentation device 104. In an implementation, the image processing applications 108 may be hosted on the electronic device 102. In another implementation, the image processing applications 108 may be remotely located with respect to the electronic device 102 and the communication may be enabled by the communication network 110. Examples of the image processing applications may include, but are not limited to, Optical character Recognition (OCR) application, Medical Imaging applications, Surveillance applications, and machine vision applications.

The electronic device 102, the image segmentation device 104, the database 106, and the image processing applications 108 may be communicatively coupled with each other, via a communication network 110. Examples of the communication network 110 may include, but are not limited to, the Internet, a cloud network, a Wireless Fidelity (Wi-Fi) network, a Wireless Local Area Network (WLAN), a Local Area Network (LAN), a telephone line (POTS), Long Term Evolution (LTE), and/or a Metropolitan Area Network (MAN). Various devices in the exemplary network environment 100 may be configured to connect to the communication network 110, in accordance with various wired and wireless communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), Zigbee, EDGE, infrared (IR), IEEE 802.11, 802.16, cellular communication protocols, and/or Bluetooth (BT) communication protocols.

In operation, the method includes ingesting an input image to be segmented as reference frame, into the image segmentation device 104. In an embodiment, the image may be captured by the electronic device 102 and may be communicated to the image segmentation device 104 as input image. In another embodiment, the input image may be retrieved by the image segmentation device 104 from the image database 106, via the communication network 110.

In an embodiment, the reference frame includes values that correspond to the values of a plurality of pixels in the input image. The reference frame may be an array having the same dimensionality as that of the input image. The process of ingesting includes initializing a matrix with the pixel values of the input image. The dimensionality of the matrix corresponds to the dimensionality of the input image. In an embodiment, the data type of the matrix may be an unsigned integer.

Subsequent to ingestion, a filter of substantially same properties as the reference frame may be initialized by the image segmentation device 104. The initialization may be such that the values in the filter may include a first pre-defined value. In an embodiment, the first pre-defined value may include a value '1', a value '2', and the like. Subsequent to initialization of the filter, a processed image may be initialized by the image segmentation device 104 in a manner such that the processed image is substantially the same as the reference image.

The image segmentation device 104 may update each of the plurality of pixels of the processed image with value of corresponding pixel in the filter. The update may be performed iteratively until the value of each the plurality of pixels of the processed image is the same as those of the reference image. In an embodiment, the updating comprises incrementing or decrementing the value of the plurality of pixels by the first pre-defined value. For example, during each iteration of update (incrementing the pixel value by pre-defined value), the image segmentation device 104 identifies a plurality of root nodes in the processed image. Each of the plurality of root nodes correspond to pixels having a second pre-defined value. In an embodiment, the second pre-defined value may include a value '1', a value '2', and the like.

Subsequently, the image segmentation device 104 may assign an index to the identified root nodes. The index corresponds to the iteration count at which the value of the pixel of the identified root node reached the second pre-defined value.

In an exemplary scenario, the value of a pixel in a 2-dimensional image having location "1023, 563" and having value '250' may be iteratively updated by a count of `1' (exemplary pre-defined value), unitl the value of the instant pixel goes to '0' (second pre-defined value) and cycles back to the initial value of '250'. The image segmentation device 104 may be configured to track the iterations and earmark the iteration at which the pixel value reached the second pre-defined value. Since the pixel value is '250', the iteration at which the second pre-defined value of '0' is reached may be '6'. In accordance with the steps disclosed above, the image segmentation device 104 may be configured to assign value `6' to all pixels (including the one at the location "1023, 563"), a value of '6' and may designate such pixels as root nodes.

The image segmentation device 104 may segment the identified root nodes of the processed image in a plurality of clusters. Each cluster includes a plurality of root nodes that may be present in a pre-defined vicinity of each other and have the assigned index that is in a pre-defined range. Further, each of the plurality of clusters may be indicative of a plurality of objects present in the ingested image. In an embodiment, the pre-defined range and the pre-defined vicinity may be user configurable. In an exemplary scenario, the pre-defined vicinity may be the pixels that are present in a 3 X 3 matrix around the root node. In another scenario, the size of the matrix to be considered may be 9 X 9. In an exemplary scenario, the pre-defined range may be a value such that is indicative of a difference of 'n' iterations. For examples, when the pre-defined range is `8', all pixels in the pre-defined vicinity and having a difference in the iterations as '8' will be clustered together. In an embodiment, when the iteration number is not used, a cosine distance between the root node and the neighboring pixels in the vicinity of the root node pixel may be used for clustering.

Once the plurality of clusters are identified, the image segmentation device 104 may communicate the clustered image to the image processing applications 108, via the communication network 110. In an embodiment, the segmented processed image may be used by the image processing applications 108 that may include, but are not limited to, Optical Character Recognition (OCR), medical diagnostics, video surveillance, robotics.

It should be noted that the various modules described above may be implemented in programmable hardware devices such as programmable gate arrays, programmable array logic, programmable logic devices, and so forth. Alternatively, the various modules described above may be implemented in software for execution by various types of processors. An identified module of executable code may, for instance, include one or more physical or logical blocks of computer instructions which may, for instance, be organized as an object, procedure, function, engine, or other construct. Nevertheless, the executables of an identified module need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for transmitting data over a communication network 108. For example, the exemplary network environment 100 may transmit data over a communication network 110 by the processes discussed herein. In particular, as will be appreciated by those of ordinary skill in the art, control logic and/or automated routines for performing the techniques and steps described herein may be implemented by the network environment 100, either by hardware, software, or combinations of hardware and software. For example, suitable code may be accessed and executed by the one or more processors on the network environment 100 to perform some or all of the techniques described herein. Similarly, application specific integrated circuits (ASICs) configured to perform some or all of the processes described herein may be included in the one or more processors on the network environment 100.

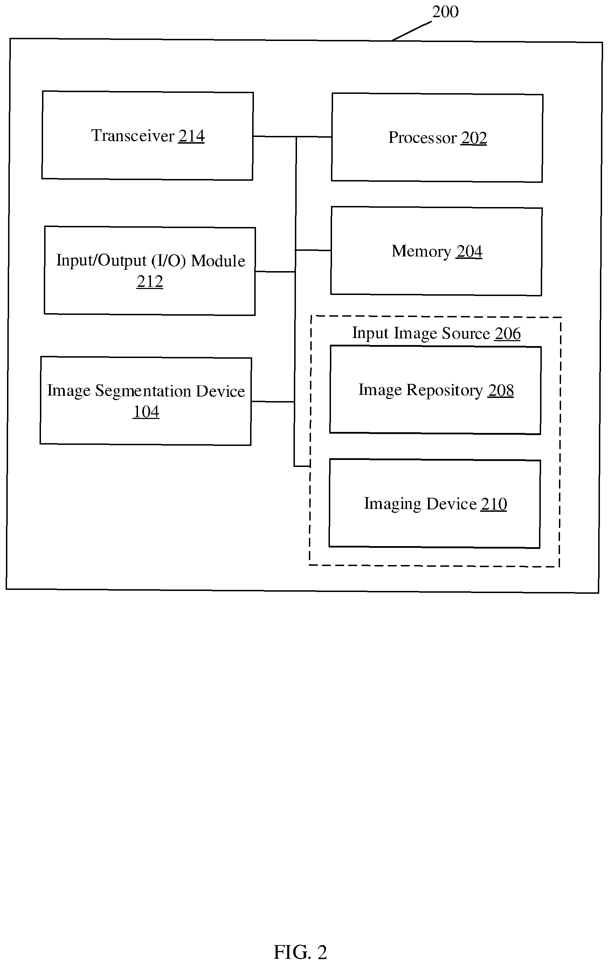

FIG. 2 is a block diagram of exemplary system for image segmentation, in accordance with some embodiments of the present disclosure. FIG. 2 is explained in conjunction with elements from FIG. 1. With reference to FIG. 2, there is shown the image segmentation system 200 that may include one or more processors, such as a processor 202, a memory 204, an input image source 206, image segmentation device 104, an input/output (I/O) unit 212, and/or a transceiver 214. The input image source may include an image repository 208 and an imaging device 210. The processor 202 may be communicatively coupled to the memory 204, the input image source 206, the image segmentation device 104, the I/O unit 212, and/or the transceiver 214.

The processor 202 may include suitable logic, circuitry, interfaces, and/or code that may be configured to execute a set of instructions stored in the memory 204. The processor 202 may be configured to enable capturing of the image by the imaging device 210, retrieval of the image from the image repository 208, facilitating image segmentation, and transmitting the segmented image for processing by image processing applications. The processor 202 may further track the activities of the community club members and may facilitate selective sharing of data among the plurality of community clubs. Examples of the processor 202 may be an X86-based processor, a Reduced Instruction Set Computing (RISC) processor, an Application-Specific Integrated Circuit (ASIC) processor, a Complex Instruction Set Computing (CISC) processor, and/or other processors.

The memory 204 may include suitable logic, circuitry, and/or interfaces that may be configured to store a machine code and/or a computer program with at least one code section executable by the processor 202. In an embodiment, the memory 204 may be configured to one or more instructions that enable the modules, such as the input image source 206, the image segmentation device 104, the I/O unit 212 to perform image segmentation and use the segmented image for image processing applications. Examples of implementation of the memory 204 may include, but are not limited to, Random Access Memory (RAM), Read Only Memory (ROM), Hard Disk Drive (HDD), and/or a Secure Digital (SD) card.

The input image source 206 may include suitable logic, circuitry, interfaces, and/or code that may be configured to provide the image to be segmented to the image segmentation device 104. The input image source 206 may include the image repository 208 and the imaging device 210. The image repository 208 may include a database of images that may be used for image segmentation. Such images may be retrieved from an image database 106 and/or may be captured using the imaging device 210 that may be integrated with the electronic device 102.

The I/O unit 212 may include suitable logic, circuitry, interfaces, and/or code that may be configured to render a Ul on an application installed on the electronic device 102. The I/O unit 212 may include various input and output devices that may be configured to render the captured and/or the segmented image on a display screen of the electronic device 102. Examples of the display screen may include, but are not limited to, Liquid Crystal Display (LCD) display, Light Emitting Diode (LED) display, Organic LED (OLED) display technology, and/or the like.

In an implementation, the I/O unit 212 may be further equipped with a photographic optical system, such as a photographic lens and/or a zoom lens, as well as one or more image sensors, such as a charge-coupled device (CCD) or a complementary metal-oxide-semiconductor (CMOS), a digital camera, a camera embedded in a personal digital assistant (PDA), a video camera, and/or a motion camera.

A person of ordinary skill in the art will appreciate that all the aforesaid modules may be included in the electronic device 102. In another implementation, the aforesaid modules of the image segmentation system 200 may be located remotely with respect to each other, in the form of hosted API's in a cloud environment.

The transceiver 214 may include suitable logic, circuitry, interfaces, and/or code that may be configured to facilitate image segmentation and processing of the segmented image. The transceiver 214 may be implemented based on known technologies to support wired or wireless communication. The transceiver 214 may include, but is not limited to, an antenna, a radio frequency (RF) transceiver, one or more amplifiers, a tuner, one or more oscillators, a digital signal processor, a coderdecoder (CODEC) chipset, a subscriber identity module (SIM) card, and/or a local buffer. The transceiver 214 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), code division multiple access (CDMA), Long Term Evolution (LTE), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), Wi-MAX, a protocol for email, instant messaging, and/or Short Message Service (SMS).

In operation, the processor 202 may be configured to ingest an input image to be segmented as reference frame, into the image segmentation device 104. In an embodiment, the image may be captured by the electronic device 102 using the imaging device 210 and may be communicated to the image segmentation device 104 as input image. In another embodiment, the input image may be retrieved by the image segmentation device 104 from the image repository 208.

In an embodiment, the reference frame includes values that correspond to the values of a plurality of pixels in the input image. The reference frame may be an array having the same dimensionality as that of the input image. The process of ingesting includes initializing a matrix with the pixel values of the input image. The dimensionality of the matrix corresponds to the dimensionality of the input image. In an embodiment, the data type of the matrix may be an unsigned integer.

Subsequent to ingestion, the processor 202 in conjunction with the image segmentation device 104 may be configured to initialize a filter of substantially same properties as the reference frame. The initialization may be such that the values in the filter may include a first pre-defined value. In an embodiment, the first pre-defined value may include a value '1', a value '2', and the like. Subsequent to initialization of the filter, the processor 202 in conjunction with the image segmentation device 104 may be configured to initialize a processed image in a manner such that the processed image is substantially the same as the reference image.

The processor 202 in conjunction with the image segmentation device 104 may be configured to update each of the plurality of pixels of the processed image with value of corresponding pixel in the filter. The update may be performed iteratively until the value of each the plurality of pixels of the processed image is the same as those of the reference image. In an embodiment, the updating comprises incrementing or decrementing the value of the plurality of pixels by the first pre-defined value. For example, during each iteration of update (incrementing the pixel value by pre-defined value), the image segmentation device 104 identifies a plurality of root nodes in the processed image. Each of the plurality of root nodes correspond to pixels having a second pre-defined value. In an embodiment, the second pre-defined value may include a value '1', a value '2', and the like.

Subsequently, the processor 202 in conjunction with the image segmentation device 104 may be configured to assign an index to the identified root nodes. The index corresponds to the iteration count at which the value of the pixel of the identified root node reached the second pre-defined value.

In an exemplary scenario, the value of a pixel in a 2-dimensional image having location "1023, 563" and having value '250' may be iteratively updated by a count of `1' (exemplary pre-defined value), till the value of the instant pixel goes to '0' (second pre-defined value) and cycles back to the initial value of '250'. The processor 202 in conjunction with the image segmentation device 104 may be configured to track the iterations and earmark the iteration at which the pixel value reached the second pre-defined value. Since the pixel value is '250', the iteration at which the second pre-defined value of '0' is reached may be '6'. In accordance with the steps disclosed above, the the processor 202 in conjunction with the image segmentation device 104 may be configured to assign value `6' to all pixels (including the one at the location "1023, 563"), a value of '6' and may designate such pixels as root nodes.

The processor 202 in conjunction with the image segmentation device 104 may be configured to segment the identified root nodes of the processed image in a plurality of clusters. Each cluster includes a plurality of root nodes that may be present in a pre-defined vicinity of each other and have the assigned index that is in a pre-defined range. Further, each of the plurality of clusters may be indicative of a plurality of objects present in the ingested image. In an embodiment, the pre-defined range and the pre-defined vicinity may be user configurable. In an exemplary scenario, the pre-defined vicinity may be the pixels that are present in a 3 X 3 matrix around the root node. In another scenario, the size of the matrix to be considered may be 9 X 9. In an exemplary scenario, the pre-defined range may be a value such that is indicative of a difference of 'n' iterations. For examples, when the pre-defined range is `8', all pixels in the pre-defined vicinity and having a difference in the iterations as '8' will be clustered together.

Once the plurality of clusters are identified, the processor 202 in conjunction with the image segmentation device 104 may be configured to communicate the clustered image to the image processing applications 108, via the communication network 110. In an embodiment, the segmented processed image may be used by the image processing applications 108 that may include, but are not limited to, Optical Character Recognition (OCR), medical diagnostics, video surveillance, robotics.

It should be noted that the various modules described above may be implemented in programmable hardware devices such as programmable gate arrays, programmable array logic, programmable logic devices, and so forth. Alternatively, the various modules described above may be implemented in software for execution by various types of processors. An identified module of executable code may, for instance, include one or more physical or logical blocks of computer instructions which may, for instance, be organized as an object, procedure, function, engine, or other construct. Nevertheless, the executables of an identified module need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for transmitting data over a communication network 108. For example, the exemplary network environment 100 may transmit data over a communication network 110 by the processes discussed herein. In particular, as will be appreciated by those of ordinary skill in the art, control logic and/or automated routines for performing the techniques and steps described herein may be implemented by the network environment 100, either by hardware, software, or combinations of hardware and software. For example, suitable code may be accessed and executed by the one or more processors on the network environment 100 to perform some or all of the techniques described herein. Similarly, application specific integrated circuits (ASICs) configured to perform some or all of the processes described herein may be included in the one or more processors on the network environment 100

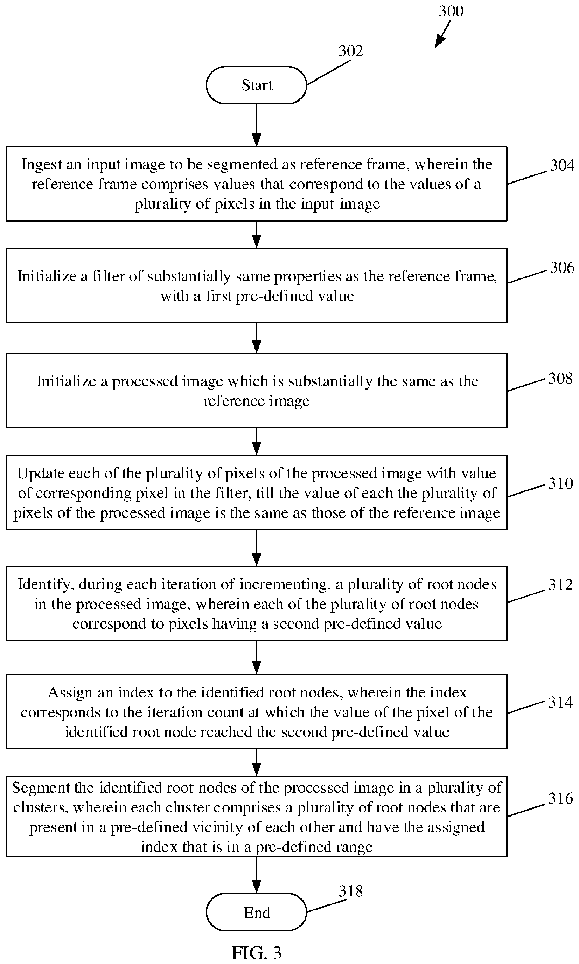

FIG. 3 is a flow diagram of a detailed exemplary process for image segmentation, in accordance with some embodiments of the present disclosure. With reference to FIG. 3, there is shown a flow chart 300. The flow chart 300 is described in conjunction with FIG's. 1 to 2. The process starts at step 202 and proceeds to step 204.

At step 304, an input image to be segmented as reference frame may be ingested. The reference frame includes values that correspond to the values of a plurality of pixels in the input image. At step 306, a filter of substantially same properties as the reference frame may be initialized with a first pre-defined value.

At step 308, a processed image which is substantially the same as the reference image may be initialized. At step 310, each of the plurality of pixels of the processed image may be updated with value of corresponding pixel in the filter, until the value of each the plurality of pixels of the processed image is the same as those of the reference image.

At step 312, during each iteration of incrementing, a plurality of root nodes in the processed image may be identified. Each of the plurality of root nodes correspond to pixels having a second pre-defined value. At step 314, an index may be assigned to the identified root nodes. The index corresponds to the iteration count at which the value of the pixel of the identified root node reached the second pre-defined value.

At step 316, the identified root nodes of the processed image may be segmented in a plurality of clusters. Each of the plurality of cluster includes a plurality of root nodes that are present in a pre-defined vicinity of each other and have the assigned index that is in a pre-defined range. At control passes to end step 318.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

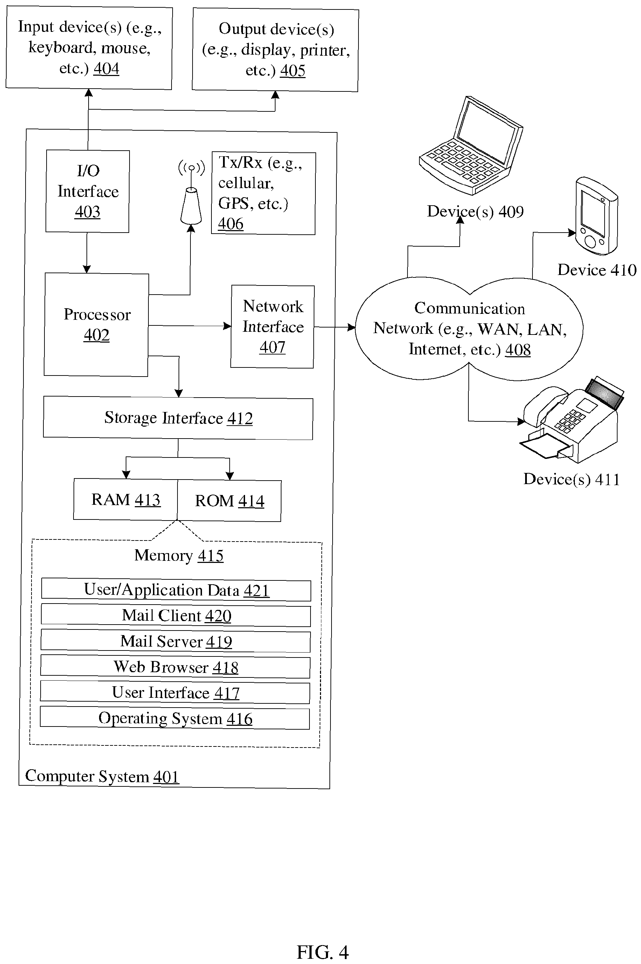

The disclosed methods and systems may be implemented on a conventional or a general-purpose computer system, such as a personal computer (PC) or server computer. Referring now to FIG. 4, a block diagram of an exemplary computer system 401 for implementing embodiments consistent with the present disclosure is illustrated. Variations of computer system 401 may be used for implementing network environment 100 for transmitting data over a communication network 108. Computer system 401 may include a central processing unit ("CPU" or "processor") 402. Processor 402 may include at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver 406 may facilitate various types of wireless transmission or reception. For example, the transceiver 406 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 409, 410, and 411. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. (e.g., past ticket repository, keywords, Ngrams, clusters or categories, relationship mapping, user queries, resolutions, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide a method where the image is segmented without the need of labelled data or training a neural network. The segmented image still preserves the semantics in the image. The proposed invention is also computationally much more efficient and can be used on edge devices due to the limited amount of computation power available with devices that include, but are not limited to mobile phones, tablets, wearables. The proposed invention also reduces the computational load by minimizing the number of pixels that are to be considered for performing image segmentation. For example, in a 640 X 480 pixel image, a total of 307,200 pixels exist. After segmenting with the proposed method only around 15,000 - 40,000 pixels are left to be considered as root nodes and the remaining pixels are linked to this reduced representation of the root nodes. The discarded pixels (leaf nodes) may be linked to the root nodes before discarding. Thus coloring the root node with a particular color will lead to coloring of the entire linked structure of the leaf nodes, which is a substantial reduction from the original number of pixels.

The specification has described system and method for providing a method and system for image segmentation. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method (300) of image segmentation, the method comprising:
ingesting (304), into an image segmentation device, an input image to be segmented as reference frame, wherein the reference frame comprises values that correspond to the values of a plurality of pixels in the input image;
initializing (306), by the image segmentation device, a filter of substantially same properties as the reference frame, with a first pre-defined value;
initializing (308), by the image segmentation device, a processed image which is substantially the same as the reference image;
updating (310), by the image segmentation device, each of the plurality of pixels of the processed image with value of corresponding pixel in the filter, till the value of each the plurality of pixels of the processed image is the same as those of the reference image;
identifying (312), by the image segmentation device, during each iteration of incrementing, a plurality of root nodes in the processed image, wherein each of the plurality of root nodes correspond to pixels having a second pre-defined value;
assigning (314), by the image segmentation device, an index to the identified root nodes, wherein the index corresponds to the iteration count at which the value of the pixel of the identified root node reached the second pre-defined value;
segmenting (316), by the image segmentation device, the identified root nodes of the processed image in a plurality of clusters, wherein each cluster comprises a plurality of root nodes that are present in a pre-defined vicinity of each other and have the assigned index that is in a pre-defined range.

2. The method (300) as claimed in claim 1, wherein ingesting (304) comprises initializing a matrix with the pixel values of the input image, and\ wherein the dimensionality of the matrix corresponds to the dimensionality of the input image.

3. The method (300) as claimed in claim 1, wherein the plurality of clusters are indicative of a plurality of objects present in the ingested image.

4. The method (300) as claimed in claim 1, wherein the updating (310) comprises incrementing or decrementing the value of the plurality of pixels by the first pre-defined value.

5. The method (300) as claimed in claim 1, wherein the pre-defined range and the pre-defined vicinity are user configurable, and wherein the segmented processed image is used for one or more of: Optical Character Recognition (OCR), medical diagnostics, video surveillance, robotics.

6. A system (200) for image segmentation, the system comprising:
a processor (202); and
a memory (204) storing instructions for execution by the processor (202), wherein the hardware processor is configured by the instructions to:
ingest an input image to be segmented as reference frame, wherein the reference frame comprises values that correspond to the values of a plurality of pixels in the input image;
initialize a filter of substantially same properties as the reference frame, with a first pre-defined value;
initialize a processed image which is substantially the same as the reference image;
update each of the plurality of pixels of the processed image with value of corresponding pixel in the filter, till the value of each the plurality of pixels of the processed image is the same as those of the reference image;
identify, during each iteration of incrementing, a plurality of root nodes in the processed image, wherein each of the plurality of root nodes correspond to pixels having a second pre-defined value;
assign an index to the identified root nodes, wherein the index corresponds to the iteration count at which the value of the pixel of the identified root node reached the second pre-defined value;
segment the identified root nodes of the processed image in a plurality of clusters, wherein each cluster comprises a plurality of root nodes that are present in a pre-defined vicinity of each other and have the assigned index that is in a pre-defined range.

7. The system (200) as claimed in claim 8, wherein ingesting comprises initializing a matrix with the pixel values of the input image, and wherein the dimensionality of the matrix corresponds to the dimensionality of the input image.

8. The system (200) as claimed in claim 8, wherein the plurality of clusters are indicative of a plurality of objects present in the ingested image.

9. The system (200) as claimed in claim 8, wherein the updating comprises incrementing or decrementing the value of the plurality of pixels by the first pre-defined value.

10. The system (200) as claimed in claim 8, wherein the pre-defined range and the pre-defined vicinity are user configurable, and wherein the segmented processed image is used for one or more of: Optical Character Recognition (OCR), medical diagnostics, video surveillance, robotics.
